# EUROPEAN PATENT SPECIFICATION

(11) **EP 0 237 343 B1**
(45) Date of publication and mention of the grant of the patent: **24.11.1993**
(21) Application number: 87302113.3
(22) Date of filing: 11.03.1987
(51) Int. Cl.: G01F 1/32

(54) **Device for detecting the amount of the air intaken by an internal combustion engine**
Vorrichtung zum Feststellen der Ansaugluftmenge einer Maschine mit interner Verbrennung
Dispositif pour la détection de la quantité d'air aspiré par une machine à combustion interne

(30) Priority: 11.03.1986 JP 34817/86 U
(43) Date of publication of application: 16.09.1987
(73) Proprietor: MITSUBISHI JIDOSHA KOGYO KABUSHIKI KAISHA, Tokyo 108 (JP); MITSUBISHI DENKI KABUSHIKI KAISHA, Tokyo 100 (JP)
(72) Inventor: Takahashi, Akira Kyoto Seisakusho of Mitsubishi, cho Ukyo-ku Kyoto City Kyoto (JP); Tada, Yasuo Himeji Seisakusho of Mitsubishi, Himeji City Hyogo Prefecture (JP)
(74) Representative: Lawson, David Glynne

(56) References cited:
- EP-A- 0 042 433
- FR-A- 2 597 972
- US-A- 3 818 877
- US-A- 4 240 299
- US-A- 4 448 064
- ADVANCES IN INSTRUMENTATION, PROCEEDINGS OF THE 24TH ANNUAL ISA CONFERENCE, Houston, 27th-30th October 1969, vol. 24, part 1, pages 528/1-528/7, Houston, US; J.C. KOOP: "Swirlmeter: The high performance gas flowmeter"
- PATENT ABSTRACTS OF JAPAN, vol. 7, no. 64 (P-183)[1209], 17th March 1983;& JP-A-57 207 824

## Description

### Background of the Invention:

The present invention relates to a device for detecting the amount of the air intaken by an internal combustion engine based upon Karman's vortex.

A fuel injection system of an internal combustion engine must continuously measure the amount of the intaken air. This measurement is taken by a so-called vortex flow meter in which a vortex generator is placed in an intake air path, and Karman's vortex which results on the downstream side of the vortex generator is measured to determine the flow rate of the fluid. This vortex flow meter contains no moving parts and is not effected by vibration, lending itself well for use in an internal combustion engine which vibrates and, particularly, for use in an automobile.

Fig. 1 shows a conventional vortex flow meter that is disclosed in Japanese Patent Publication No. 56415/1983, wherein reference numeral 1 denotes a flow meter having a vortex generator 2, and 3 denotes the Karman's vortex that is generated. The vortex generator 2 is installed in an intake air path of an internal combustion engine. Reference numeral 4 denotes an ultrasonic wave generator which is so provided as to propagate ultrasonic waves across the Karman's vortex 3, reference numeral 5 denotes an ultrasonic wave receiver which receives ultrasonic waves, numeral 6 denotes an oscillation circuit for oscillating the ultrasonic wave generator 4, reference numeral 7 denotes a voltage controlled phase deviation circuit which controls the phase deviation angle from the output signal of the oscillation circuit 6 depending upon the output voltage of a loop filter 10, reference numeral 8 denotes a first waveform shaping circuit which amplifies and shapes the output of the ultrasonic wave receiver 5, reference numeral 9 denotes a phase comparator which receives, as a first input signal, the output of the first waveform shaping circuit 8 and receives, as a second input signal, the output of the voltage controlled phase deviation circuit 7, in order to detect the phase difference between the first input signal and the second input signal, numeral 10 denotes a loop filter which removes unnecessary frequency components from the output of the phase comparator 9, and 11 denotes a low-pass filter which removes carrier frequency components from the output of the phase comparator 9.

The operation of the prior art device will now be described. First, ultrasonic waves generated from the ultrasonic wave generator 4 are phase-modulated by Karman's vortex 3, and are received by the ultrasonic wave receiver 5. The received waves are then shaped by the waveform shaping circuit 8. A phase synchronizing loop is constituted by the oscillation circuit 6, voltage controlled phase deviation circuit 7, phase comparator 9 and loop filter 10. The voltage controlled phase deviation circuit 7 controls the phase deviation angle to only maintain a high frequency stability of the signals of an ultrasonic wave oscillation frequency. Further, characteristics of the loop filter 10 in the phase synchronizing loop are set to be capable of following at a sufficiently high speed the modulated angular frequency of the signals of which the phase is modulated by Karman's vortex. The output of the loop filter 10 so changes the output of the voltage controlled phase deviation circuit 7 that it is brought into synchronism with the ultrasonic received signal, and is directly used as a phase demodulated output. A phase synchronizing angle of the phase synchronizing loop is determined by the characteristics of the phase comparator 9 and of the loop filter 10.

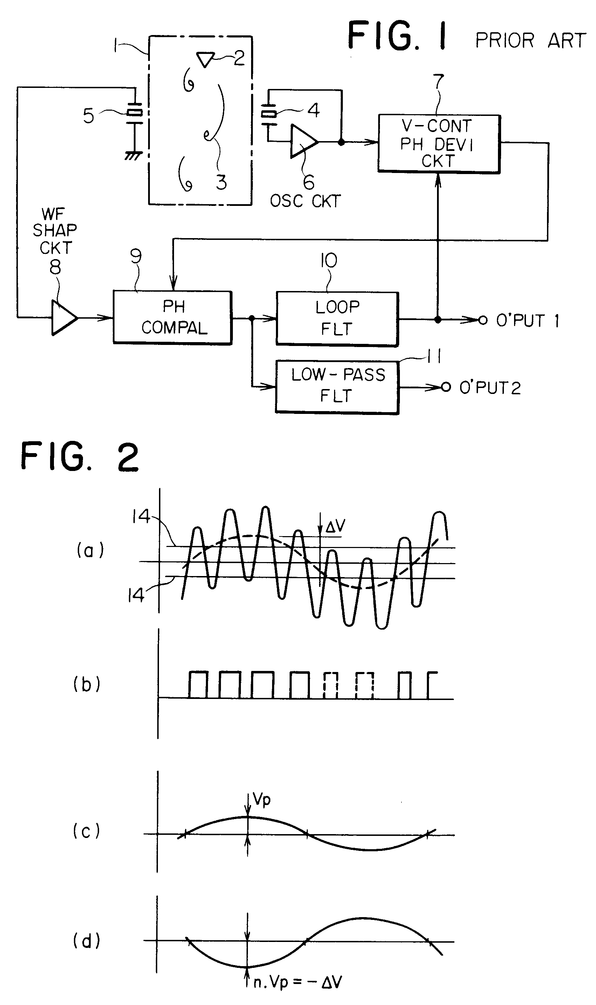

The air intaken by the internal combustion engine does not form a uniform stream but is pulsating. Therefore, Karman's vortex 3 generated by the vortex generator 2 is unstable. Pulsation in the intaken air develops particularly in a multi-cylinder engine in which the intake valves operate in an overlapped manner. The overlapping gives rise to the formation of a surge pulse of negative pressure at a moment when the intake valve is opened. When the throttle valve is nearly fully opened, there is obtained a no orifice effect and the surge pulse of a negative pressure does not attenuate. This fact causes Karman's vortex 3 to develop irregularly. In the intake air path, therefore, the pressure varies as indicated by a dotted line in Fig. 2(a). Hence, the output of the low-pass filter 11 pulsates as indicated by a solid line in Fig. 2(a). Fig.2(b) shows this output of which the waveform is shaped, wherein the areas of broken lines indicate that the waveform-shaped outputs are missing, without properly detecting the number of Karman's vortexes 3, and that the amount of the air intaken by the internal combustion engine is not correctly detected.

Advances in instrumentation proceedings of the twenty-fourth annual ISA conference, Houston 27 to 30 October, 1969, Volume 24 Part 1, pages 528/1 to 528/7 "Swirlmeter: the high performance gas flow meter" relates to vortex flow meters in general. The article discusses vortex precession and describes the determination of gas flow using this principle. The reference acknowledges that the gas flow meter can be used in pulsating flows or where temperature and pressure vary. The reference teaches the measurement of pressure and temperature in conjunction with a digital or analogue compensation circuit.

US patent specification 3 818 877 relates to an intake air quantity measurement in an internal combustion engine. An air flow sensor and pressure sensor are positioned in an intake air flow duct which is distinctly upstream of the air cleaner of the internal combustion engine. The air flow quantity and the intake air flow pressure are therefore sensed in a relatively narrow passageway of the IC engine.

Japanese Patent Abstract, Volume 7, No 64 (relating to Japanese patent specification 57-207824A) is directed to an arrangement for elevating the extent of noise resistance and for making the device compact. The air cleaner body is made of an electric conductor and an air quantity measuring device is positioned inside the air cleaner.

### Summary of the Invention:

The present invention was accomplished in order to solve the above-mentioned problem inherent in the prior art, and has for its object to provide a device for detecting the amount of the air intaken by an internal combustion engine, which is capable of correctly detecting the amount of the air intaken by the internal combustion engine.

According to the present invention, there is provided a device for determining the amount of air taken into an air intake passage by an internal combustion engine, the device comprising an air cleaner, an air intake passage, vortex generator means for creating turbulence in the air intake passage, air quantity detector means for determining the amount of air taken into the air intake passage on the basis of a comparison between a reference signal and a signal modulated by the turbulent air in the intake passage, a pressure sensor for providing an air pressure signal indicative of the pressure of the intake air, and compensation means for adjusting the determination of the amount of air, in dependence upon the air pressure signal, thereby to compensate for errors caused by pressure variations in the intake air; characterised in that the air cleaner is positioned to clean air entering the air intake passage and the pressure sensor is mounted in the air cleaner so as to monitor the pressure of air inside the air cleaner before it enters the air intake passage whereby the effects of high frequency pressure variations on the detection of the amount of air by the device are eliminated.

In embodiments of the present invention, the pressure in the air cleaner having a large air path area is detected by the pressure sensor to remove high-frequency components contained in the pressure in the intake air path, and a difference is found between the output signal of the pressure sensor and the output of a low-pass filter, in order to cancel the pulsation in the output of the low-pass filter caused by the variation of pressure in the intake air path.

### Brief Description of the Drawings:

Figure 1 is a diagram illustrating the structure of a conventional device;
Figures 2(a), 2(b), 2(c), and 2(d) are diagrams showing operation waveforms of a device for detecting the amount of the intaken air;
Figure 3 is a diagram illustrating the structure of a device for detecting the amount of the intaken air according to an embodiment of this device;
Fig. 4 is a section view showing major portions of the device of Fig. 3; and
Fig. 5 is a diagram showing operation waveforms at each of the portions of the device when the pressure in the intake air path contains high-frequency components.

In the drawings, the same reference numerals denote the same or corresponding portions.

### Description of the Preferred Embodiment:

An embodiment of the invention will now be described in conjunction with the accompanying drawings.

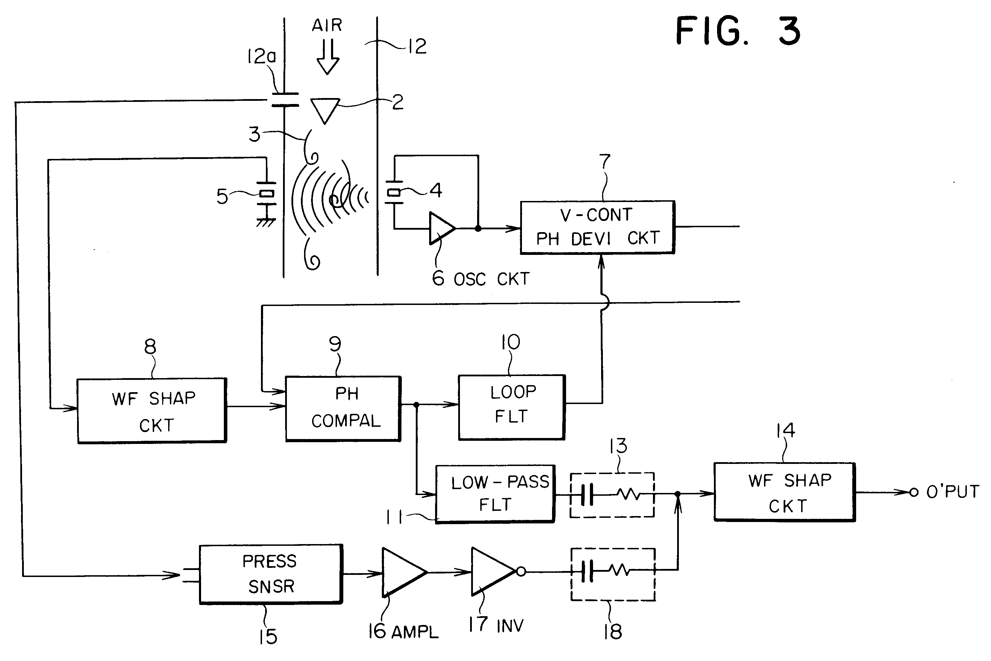

In Fig. 3, reference numeral 12 denotes an intake air path of an internal combustion engine, numeral 2 denotes a vortex generator disposed in the path, numeral 13 denotes a first CR series circuit provided on the output side of a low-pass filter 11, reference numeral 14 denotes a second waveform shaping circuit provided on the output side of the first CR series circuit 13, reference numeral 15 denotes a pressure sensor connected to a pressure take-out port 12a that is provided on an upstream side of the intaken air path 12, reference numeral 16 denotes an amplifier provided on the output side of the pressure sensor 15, reference numeral 17 denotes an inverter provided on the output side of the amplifier 16, and reference numeral 18 denotes a second CR series circuit provided on the output side of the inverter 17, the output side of the second CR series circuit 18 being connected to the input side of the second waveform shaping circuit 14.

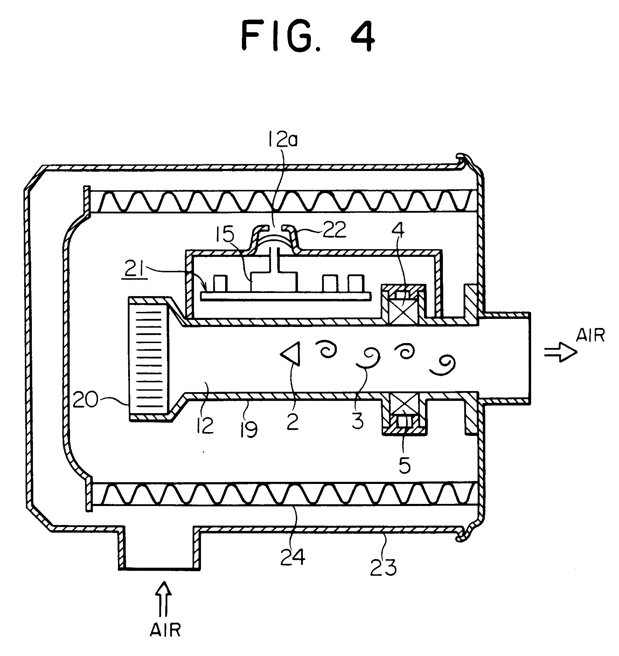

Fig. 4 is a section view showing the structure of major portions in the above-mentioned device for detecting the amount of the intaken air, wherein reference numeral 19 denotes a member for detecting the amount of the intaken air, which constitutes the intake air path 12, reference numeral 20 denotes a honeycomb rectifier member provided on the upstream side of the member 19 which detects the amount of the intaken air, and numeral 21 denotes a detect control circuit which consists of an oscillation circuit 6, voltage controlled phase deviation circuit 7, first waveform shaping circuit 8, phase comparator 9, low-pass filter 10, low-pass filter 11, the first CR series circuit 13, the second waveform shaping circuit 14, the pressure sensor 15, the amplifier 16, the inverter 17, and the second CR series circuit 18.

The detect control circuit 21 is provided on the outer periphery of the member 19 which detects the amount of the intaken air. The pressure take-out port 12a of the pressure sensor 15 of the detect control circuit 21 is so disposed as to detect the pressure in the outer peripheral portion of the member 19 which detects the amount of the intaken air. Reference numeral 22 denotes a filter provided between the pressure take-out port 12a and the pressure sensor 15. The member 19 for detecting the amount of the intaken air and the detect control circuit 21 are installed inside the filter 24 of the air cleaner 23.

Operation of the thus constructed device for detecting the amount of the intaken air will now be described. The pressure variation in the intake air path indicated by a broken line in Fig. 2(a) is detected by the pressure sensor 15 as shown in Fig.2(c). The detected value is amplified n times by the amplifier 16, so as to correspond to the pressure variation, and is then inverted by the inverter 17 as shown in Fig. 2(d). The output of the low-pass filter 11 is smoothed by the first CR series circuit 13, the output of the inverter 17 is smoothed by the second CR series circuit 18, and these two outputs are added. The added output is then subjected to waveform shaping in the second waveform shaping circuit 14. In this case, pulsation in the output of the low-pass filter 11 is cancelled, and the output of the second waveform shaping circuit 14 contains no missing portion unlike the waveform indicated by dotted lines in Fig. 2(b), making it possible to correctly detect the amount of the intaken air.

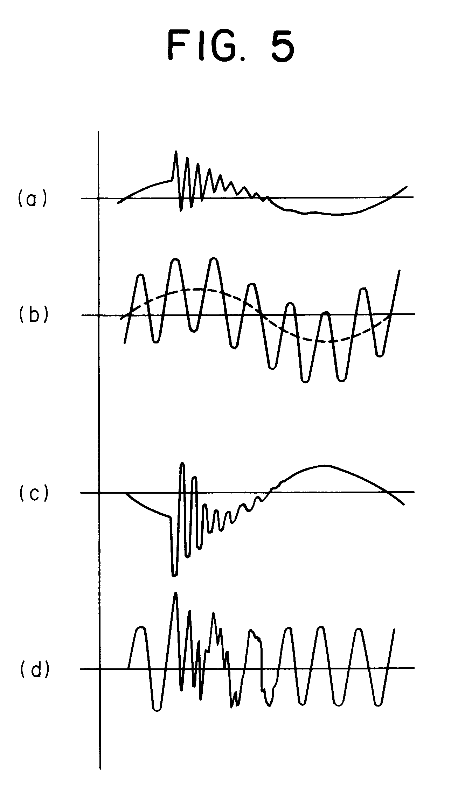

Further, since the pressure take-out port 12a of the pressure sensor 15 is provided in the air cleaner 22, the device is not affected by high-frequency components contained in the pressure as will be described below. That is, the pressure in the intake air path 12 near the ultrasonic wave receiver 5 may contain high-frequency components as shown in Fig. 5(a) depending upon the condition in the intake air path on the downstream side of the vortex generator 2. Pulsation in the output signals of the low-pass filter 11 is filtered by the low-frequency pressure follow-up performance of the ultrasonic wave generator and receiver 4, 5, whereby the output signals are formed as shown in Fig. 5(b). Here, however, the pressure sensor 15 exhibits follow-up characteristics up to a high frequency. If the output of the pressure sensor 15 is amplified by n times and is added up (Fig. 5(c)), the device is affected by high-frequency components of the pressure as shown in Fig. 5(d) and makes it difficult to correctly detect the amount of the intaken air.

The above problem, however, can be solved if the area of the intake air path 12 is increased to decrease the fluidic high-frequency impedance of the intake air path 12, so that the high-frequency components are absorbed. Therefore, if the pressure take-out port 12a is provided in the air cleaner 22 as done in the aforementioned embodiment, the device is not affected by the high-frequency components contained in the pressure, since the air cleaner 22 works as a wide-area portion provided for the intake air path 12. Further, since the wide-area portion needs not be separately provided, the space can be reduced and the manufacturing cost can be decreased, too.

As described above, the device for detecting the amount of the intaken air of the present invention cancels the pulsation of the low-pass filter caused by the pressure variation in the intake air path. Further, since the pressure take-out port and the detect control circuit are provided in the air cleaner, the amount of the air intaken by the internal combustion engine can be correctly detected. Therefore, the present invention makes it possible to reduce the required space and to decrease the manufacturing cost.

## Claims

1. A device for determining the amount of air taken into an air intake passage (12) by an internal combustion engine, the device comprising an air cleaner (23), an air intake passage (12), vortex generator means (2) for creating turbulence in the air intake passage (12), air quantity detector means (4,5,21) for determining the amount of air taken into the air intake passage on the basis of a comparison between a reference signal and a signal modulated by the turbulent air in the intake passage, a pressure sensor (12a, 15) for providing an air pressure signal indicative of the pressure of the intake air, and compensation means (13, 14, 16, 17, 18) for adjusting the determination of the amount of air, in dependence upon the air pressure signal, thereby to compensate for errors caused by pressure variations in the intake air; characterised in that the air cleaner is positioned to clean air entering the air intake passage and the pressure sensor (12a, 15) is mounted in the air cleaner (23) so as to monitor the pressure of air inside the air cleaner before it enters the air intake passage whereby the effects of high frequency pressure variations on the detection of the amount of air by the device are eliminated.

2. A device according to Claim 1, wherein at least part of the air intake passage, the air quantity determining means (4, 5, 21) and the compensation means are also mounted in the air cleaner (23).

3. A device for detecting the amount of the air intaken by an internal combustion engine according to Claim 2, wherein:
the air quantity detector means comprises an ultrasonic wave generator (4) and an ultrasonic wave receiver (5) which are provided on either side of the air intake passage (19) for detecting the amount of the intaken air, the ultrasonic wave generator propagating the ultrasonic waves across the Karman's vortices (3) produced by the vortex generator means and the ultrasonic wave receiver receiving the ultrasonic waves of which the phases are modulated by Karman vortices;
the air quantity detector means also comprises an oscillation circuit (6) for oscillating the ultrasonic wave generator (4), the air quantity detector means being operative for detecting a phase difference between the output signal of the oscillation circuit and the output signal of the ultrasonic wave receiver, and for producing the output while effecting the correction relying upon the output signal of the pressure sensor (15);
the control and processing circuit (21) of the air quantity detector is mounted in a housing mounted around the air intake passage but within the air cleaner;
a pressure take-out port (12a) of the pressure sensor (15) is formed in the wall of said housing.

4. A device according to Claim 3, wherein the air quantity detector means comprises :
a first waveform shaping circuit (8) which shapes the output waveform of the ultrasonic wave receiver (5);
a phase comparator (9) which receives, as a first input, the output signal of the first waveform shaping circuit;
a low pass filter (10) which removes unwanted frequency components from the output of the phase comparator;
a voltage controlled phase deviation circuit (7) which controls the phase deviation angle from the output signal of the oscillation circuit in response to the output voltage of the loop filter;
a low-pass filter (11) which removes carrier frequency components from the output signal of the phase comparator (9), which receives, as a second input, the output of the voltage controlled phase deviation circuit (7), and which produces a phase difference between the first input and the second input; and
a second waveform shaping circuit (14) which shapes and produces the difference between the output signal of the pressure sensor (15) and the output signal of the low-pass filter (11).

5. A device for detecting the amount of the air intaken by an internal combustion engine according to Claim 3, wherein the air intake passage (19) consists of a cylindrical member, and a rectifying member (20) is provided in the inlet of said passage on the upstream side of the vortex generator (2).

6. A device for detecting the amount of the air intaken by an internal combustion engine according to Claim 5, wherein the air cleaner (23) consists of a casing having an air introduction port and an air supply port, and a cylindrical air filter (24) which separates the air introduction port and said air supply port from each other.

## Patentansprüche

1. Vorrichtung zum Bestimmen der von einer Brennkraftmaschine in einen Luftansaugkanal (12) angesaugten Luftmenge, wobei die Vorrichtung aufweist: eine Luftfiltereinrichtung (23), einen Luftansaugkanal (12), eine Wirbelerzeugungseinrichtung (2), um in dem Luftansaugkanal (12) eine Turbulenz zu erzeugen, eine Luftmengendetektoreinrichtung (4, 5, 21), um die in den Luftansaugkanal angesaugte Luftmenge auf der Basis eines Vergleichs zwischen einem Referenzsignal und einem von der turbulenten Luft in dem Ansaugkanal modulierten Signal zu bestimmen, einen Drucksensor (12a, 15), um ein Luftdrucksignal zu liefern, das den Druck der Ansaugluft anzeigt, und eine Kompensationseinrichtung (13, 14, 16, 17, 18), um die Bestimmung der Luftmenge in Abhängigkeit von dem Luftdrucksignal zu verstellen, um dadurch durch Druckänderungen in der Ansaugluft verursachte Abweichungen zu kompensieren, dadurch gekennzeichnet, daß die Luftfiltereinrichtung positioniert ist, um Luft zu filtern, die in den Luftansaugkanal eintritt, und der Drucksensor (12a, 15) in der Luftfiltereinrichtung (23) angebracht ist, um den Druck von Luft in der Luftfiltereinrichtung zu überwachen, bevor sie in den Luftansaugkanal eintritt, wodurch die Auswirkungen von hochfrequenten Druckänderungen beim Detektieren der Luftmenge durch die Vorrichtung eliminiert werden.

2. Vorrichtung nach Anspruch 1, wobei mindestens ein Teil des Luftansaugkanals, die Luftmengenbestimmungseinrichtung (4, 5, 21) und die Kompensationseinrichtung ebenfalls in der Luftfiltereinrichtung (23) angebracht sind.

3. Vorrichtung zum Detektieren der von einer Brennkraftmaschine angesaugten Luftmenge nach Anspruch 2, wobei:
die Luftmengendetektoreinrichtung einen Ultraschallwellenerzeuger (4) und einen Ultraschallwellenempfänger (5) aufweist, die auf beiden Seiten des Luftansaugkanals (19) vorgesehen sind, um die Ansaugluftmenge zu detektieren, wobei der Ultraschallwellenerzeuger die Ultraschallwellen über die von der Wirbelerzeugungseinrichtung erzeugten Kármánschen Wirbel (3) fortpflanzt und der Ultraschallwellenempfänger die Ultraschallwellen empfängt, deren Phasen durch Kármánsche Wirbel moduliert sind;
die Luftmengendetektoreinrichtung ferner einen Schwingkreis (6) zum Schwingen des Ultraschallwellenerzeugers (4) aufweist, wobei die Luftmengendetektiereinrichtung wirksam ist, um eine Phasendifferenz zwischen dem Ausgangssignal des Schwingkreises und dem Ausgangssignal des Ultraschallwellenempfängers zu detektieren und um das Ausgangssignal zu erzeugen, während sie gleichzeitig die Korrektur aufgrund des Ausgangssignal des Drucksensors (15) bewirkt;
die Steuer- und Verarbeitungsschaltung (21) des Luftmengendetektors in einem Gehäuse angebracht ist, das um den Luftansaugkanal herum, aber innerhalb der Luftfiltereinrichtung angeordnet ist;
eine Druckherausführöffnung (12a) des Drucksensors (15) in der Wand des Gehäuses gebildet ist.

4. Vorrichtung nach Anspruch 3, wobei die Luftmengendetektoreinrichtung aufweist:
eine erste Wellenformungsschaltung (8), die die Ausgangswellenform des Ultraschallwellenempfängers (5) formt;
einen Phasenvergleicher (9), der als ein erstes Eingangssignal das Ausgangssignal der ersten Wellenformungsschaltung empfängt;
ein Tiefpaßfilter (10), das unerwünschte Frequenzkomponenten aus dem Ausgangssignal des Phasenvergleichers entfernt;
eine spannungsgesteuerte Phasenabweichungsschaltung (7), die den Phasenabweichungswinkel von dem Ausgangssignal des Schwingkreises in Abhängigkeit von der Ausgangsspannung des Schleifenfilters steuert;
ein Tiefpaßfilter (11), das Trägerfrequenzkomponenten aus dem Ausgangssignal des Phasenvergleichers (9) entfernt, der als ein zweites Eingangssignal das Ausgangssignal der spannungsgesteuerten Phasenabweichungsschaltung (7) empfängt und eine Phasendifferenz zwischen dem ersten Eingangssignal und dem zweiten Eingangssignal erzeugt; und
eine zweite Wellenformungsschaltung (14), die die Differenz zwischen dem Ausgangssignal des Drucksensors (15) und dem Ausgangssignal des Tiefpaßfilters (11) formt und erzeugt.

5. Vorrichtung zum Detektieren der von einer Brennkraftmaschine angesaugten Luftmenge nach Anspruch 3, wobei der Luftansaugkanal (19) aus einem zylindrischen Element besteht und ein Gleichrichterelement (20) in dem Einlaß des Kanals an der Aufstromseite der Wirbelerzeugungseinrichtung (2) vorgesehen ist.

6. Vorrichtung zum Detektieren der von einer Brennkraftmaschine angesaugten Luftmenge nach Anspruch 5, wobei die Luftfiltereinrichtung (23) aus einem Gehäuse mit einem Lufteinlaßkanal und einem Luftförderkanal sowie aus einem zylindrischen Luftfilter (24) besteht, der den Lufteinlaßkanal und den Luftförderkanal voneinander trennt.

## Revendications

1. Dispositif pour déterminer la quantité d'air aspiré dans un passage d'admission d'air (12) par un moteur à combustion interne, le dispositif comprenant un filtre à air (23), un passage d'admission d'air (12), un moyen générateur de turbulence (2) pour créer une turbulence dans le passage d'admission d'air (12), un moyen détecteur de quantité d'air (4,5,21) pour déterminer la quantité d'air prise dans le passage d'admission d'air sur la base d'une comparaison entre un signal de référence et un signal modulé par l'air turbulent dans le passage d'admission, un détecteur de pression (12a,15) pour produire un signal de pression d'air représentatif de la pression de l'air aspiré, et un moyen de compensation (13,14,16,17,18) pour régler la détermination de la quantité d'air, suivant le signal de pression d'air, pour compenser de la sorte des erreurs provoquées par des variations de pression dans l'air d'admission; caractérisé en ce que le filtre à air est positionné pour filter l'air entrant dans le passage d'admission d'air et le détecteur de pression (12a,15) est monté dans le filtre à air (23) afin de contrôler la pression d'air à l'intérieur du filtre à air avant qu'il entre dans le passage d'admission d'air, de la sorte les effets des variations de pression haute fréquence sur la détection de la quantité d'air par le dispositif sont éliminés.

2. Dispositif selon la revendication 1, dans lequel au moins une partie du passage d'admission d'air, le moyen de détermination de quantité d'air (4, 5, 21) et le moyen de compensation sont également montés dans le filtre à air (23).

3. Dispositif pour détecter la quantité d'air aspiré par un moteur à combustion interne selon la revendication 2, dans lequel :
le moyen détecteur de quantité d'air comprend un générateur d'ondes ultrasoniques (4) et un récepteur d'ondes ultrasoniques (5) qui sont prévus des deux côtés du passage d'admission d'air (19) pour détecter la quantité de l'air aspiré, le générateur d'ondes ultrasoniques propageant les ondes ultrasoniques à travers les turbulences de Karman (3) produites par le moyen générateur de turbulence et le récepteur d'ondes ultrasoniques recevant les ondes ultrasoniques dont les phases sont modulées par les turbulences de Karman;
le moyen détecteur de quantité d'air comprend également un circuit d'oscillation (6) pour faire osciller le générateur d'ondes ultrasoniques (4), le moyen détecteur de quantité d'air fonctionnant pour détecter une différence de phases entre le signal de sortie du circuit d'oscillation et le signal de sortie du récepteur d'ondes ultrasoniques, et pour produire la sortie tout en effectuant la correction reposant sur le signal de sortie du détecteur de pression (15);
le circuit de contrôle et de traitement (21) du détecteur de quantité d'air est monté dans un boîtier monté autour du passage d'admission d'air, mais dans le filtre à air;
un orifice de sortie de pression (12a) du détecteur de pression (15) est formé dans la paroi dudit boîtier.

4. Dispositif selon la revendication 3, dans lequel le moyen détecteur de quantité d'air comprend :
un premier circuit de mise en forme d'onde (8) qui conforme la forme d'onde de sortie du récepteur d'ondes ultrasoniques (5);
un comparateur de phases (9) qui reçoit, comme première entrée, le signal de sortie du premier circuit de mise en forme d'onde;
un filtre passe-bas (10) qui retire des composantes de fréquence non souhaitées de la sortie du comparateur de phases;
un circuit de déviation de phase contrôle en tension (7) qui contrôle l'angle de déviation de phase du signal de sortie du circuit d'oscillation en réponse à la tension de sortie du filtre en boucle;
un filtre passe-bas (11) qui retire des composantes de fréquence de porteuse du signal de sortie du comparateur de phases (9), qui reçoit, comme seconde entrée, la sortie du circuit de déviation de phase contrôlé en tension (7), et qui produit une différence de phases entre la première entrée et la seconde entrée; et
un second circuit de mise en forme d'onde (14) qui conforme et produit les différences entre le signal de sortie du détecteur de pression (15) et le signal de sortie du filtre passe-bas (11).

5. Dispositif pour détecter la quantité d'air aspiré par un moteur à combustion interne selon la revendication 3, dans lequel le passage d'admission d'air (19) consiste en un élément cylindrique, et un élément redresseur (20) est prvu dans l'entrée du passage du côté amont du générateur de turbulence (2).

6. Dispositif pour détecter de l'air aspiré par un moteur à combustion interne selon la revendication 5, dans lequel le filtre à air (23) consiste en un boîtier ayant un orifice d'introduction d'air et un orifice d'alimentation d'air, et un filtre à air cylindrique (24) qui sépare l'orifice d'introduction d'air et l'orifice d'alimentation d'air l'un de l'autre.
